# EUROPÄISCHE PATENTANMELDUNG

(11) **EP 4 400 749 A1**
(43) Veröffentlichungstag der Anmeldung: **17.07.2024**
(21) Anmeldenummer: 23151434.0
(22) Anmeldetag: 13.01.2023
(51) Int. Cl.: F16K 3/12, F16K 31/50, F16K 3/314

(54) **SCHIEBEREINHEIT FÜR EINE ABSPERRARMATUR**

(71) Anmelder: Georg Fischer Rohrleitungssysteme AG, 8201 Schaffhausen (CH)
(72) Erfinder: TREFZ, Oliver, 79848 Bonndorf (DE); ANDRY, Martin, 7551 Ftan (AU); HUNNEKUHL, Jeorg, 79798 Jestetten (DE); KRAUTER, Christoph, 78244 Gottmadingen (DE)
(74) Vertreter: Fenner, Seraina

(57) **Zusammenfassung**

Schiebereinheit (1) für eine Absperrarmatur (11) vorzugsweise einen Absperrschieber beinhaltend einen Absperrkeil (2) zum Verschliessen und Öffnen der Absperrarmatur und eine Gewindeverbindung (4) aufweisende Antriebseinheit (3) zum Betätigen des Absperrkeils, wobei die Schiebereinheit eine abgedichtete Kammer (6) aufweist, wobei die Gewindeverbindung der Antriebseinheit in der abgedichteten Kammer angeordnet ist und zur Abdichtung der Kammer eine Dichteinheit (5) vorgesehen ist, wodurch die komplette Gewindeverbindung konstant vor dem Medium und Verschmutzungen gestützt ist, sowohl bei offener wie auch geschlossener Absperrarmatur.

## Beschreibung

Die Erfindung betrifft eine Schiebereinheit für eine Absperrarmatur vorzugsweise einen Absperrschieber beinhaltend einen Absperrkeil zum Verschliessen und Öffnen der Absperrarmatur und eine Gewindeverbindung aufweisende Antriebseinheit zum Betätigen des Absperrkeils.

Derartige Absperrarmaturen werden meist in Leitungen für die Versorgung eingesetzt die dem Transport von flüssigen oder gasförmigen Medien dienen. Die Schiebereinheit einer solchen Absperrarmatur, vorzugsweise eines Absperrschiebers ist senkrecht zur Rohrleitung bzw. auf deren Mittelachse ausgerichtet und lässt sich auch senkrecht dazu verschieben um die Absperrarmatur zu Öffnen oder zu Schliessen. Die Schiebereinheit weist zur Verschiebung bzw. Betätigung des Absperrkeils von der Offenstellung in die Schliessstellung oder umgekehrt eine Antriebsachse auf, die meist als Gewindespindel mit einer Gewindemutter ausgebildet ist. Bei solchen, meist metallischen Absperrarmaturen ist die Gewindespindel sowie die Gewindemutter erfahrungsgemäss mediumberührend im Gehäuse bzw. im Schieberraum des Gehäuses der Absperrarmatur angeordnet. Das heisst, das Medium, das durch den Absperrschieber hindurchströmt, kann auch in den Bereich oberhalb des Absperrkeils eintreten durch den auch die Gewindespindel verläuft. Dadurch verschmutzen die Spindel und die Mutter rasch und tendieren aufgrund der noch dazukommenden seltenen Betätigung zum Festsitzen, weshalb hohe Drehmomente aufgewendet werden müssen, um die Gewindespindel und die Mutter in Gang zu bringen.

Die EP 2 345 831 A1 offenbart ein Absperrelement einer Absperrarmatur bei der die Antriebsspindel in der Schieberkammer des Absperrarmaturengehäuses angeordnet ist. Medium und Schmutz treten über den oberen Bereich des Absperrelements, welche gegenüber dem Gehäuse kaum abgedichtet ist in die Schieberkammer ein und setzen sich an der Gewindespindel fest, was eine Betätigung erschwert.

Es ist Aufgabe der Erfindung eine Schiebereinheit vorzuschlagen bei der weder das Medium noch Schmutz an die Gewindeverbindung der Antriebseinheit gelangen kann.

Diese Aufgabe wird erfindungsgemäss dadurch gelöst, dass die Schiebereinheit eine abgedichtete Kammer aufweist, wobei die Gewindeverbindung der Antriebseinheit in der abgedichteten Kammer angeordnet ist und zur Abdichtung der Kammer eine Dichteinheit vorgesehen ist, wodurch die komplette Gewindeverbindung konstant vor dem Medium und Verschmutzung gestützt ist sowohl bei offener wie auch geschlossener Absperrarmatur.

Die erfindungsgemässe Schiebereinheit für eine Absperrarmatur, vorzugsweise einen Absperrschieber beinhaltend einen Absperrkeil zum Verschliessen und Öffnen der Absperrarmatur und eine Gewindeverbindung aufweisende Antriebseinheit zum Betätigen des Absperrkeils. Der Absperrkeil ist vorzugsweise aus Kunststoff oder einem Verbundmaterial ausgebildet. Die Schiebereinheit ist in einem Absperrarmaturengehäuse bzw. Absperrschiebergehäuse, vorzugsweise aus Kunststoff oder einem Verbundmaterial angeordnet. Die Verschiebung des Absperrkeils zum Öffnen und Schliessen der Absperrarmatur erfolgt senkrecht zur Durchströmungsrichtung des Mediums in der Armatur bzw. zur Rohrleitung in die die Armatur eingebaut wird. Die Antriebseinheit weist eine Gewindeverbindung auf mittels dieser der Absperrkeil vertikal verschoben wird. Vorzugsweise ist der Absperrkeil über seine Stirnseiten im Gehäuse verdrehsicher geführt. Vorzugsweise ist die Antriebsachse der Antriebseinheit nicht steigend ausgebildet, so dass sich die Achse im Gehäuse vertikal nicht verschiebt.

Die Schiebereinheit weist eine abgedichtete Kammer auf, wobei die Gewindeverbindung der Antriebseinheit in der abgedichteten Kammer angeordnet ist, dadurch wird vermieden, dass das Medium oder Schmutz an die Gewindeverbindung gelangt und sich so das Gewinde nicht festsetzt. Die in der Schiebereinheit angeordnete abgedichtete Kammer umgibt die Gewindeverbindung der Antriebseinheit. Zur Abdichtung der Kammer ist eine Dichteinheit vorgesehen, wodurch die komplette Gewindeverbindung konstant vor dem Medium und Verschmutzung gestützt ist sowohl bei offener wie auch geschlossener Absperrarmatur. Es ist vorteilhaft, wenn die im Eingriff stehende Gewindeverbindung sich nur über einen kurzen Abschnitt, vorzugsweise ein bis 4-mal des Gewindedurchmessers erstreckt und die Gewindemutter schwimmend gelagert ist, wodurch dem Absperrkeil ein gewisser Freiheitsgrad bzw. eine Relativbewegung zwischen Absperrkeil und Antriebsachse offensteht und er sich beim Schliessen der Armatur im Gehäuse bzw. im Dichtsitz selbst ausrichtet und die Armatur optimal verschlossen und dicht ist. Damit die Dichtheit dennoch gewährleistet ist, ist auch die Dichteinheit vorzugsweise schwimmend angeordnet, wodurch sie ebenfalls eine gewisse Relativbewegung zulässt und aufnimmt.

Die Schiebereinheit weist eine abgedichtete Kammer auf. Die Kammer bildet vorzugsweise einen geschlossenen Bereich bzw. Raum durch den die Antriebsachse der Antriebseinheit über eine Öffnung hineinragt und die mit der Dichteinheit medium-dicht verschlossen ist.

Als vorteilhaft hat sich gezeigt, wenn die abgedichtete Kammer zumindest teilweise durch einen sich im Absperrkeil koaxial zur Antriebsachse erstreckenden Hohlraum, vorzugsweise eine Bohrung, gebildet ist. Dies ermöglicht eine nichtsteigende Antriebseinheit mit einer vertikalen Verschiebung bzw. senkrecht zur Rohrleitung des Absperrkeils.

Vorzugsweise ist der Hohlraum im Absperrkeil nach unten hin geschlossen bzw. verläuft nicht durgehend bzw. ist als Sacklochbohrung, unter der auch eine Sacklochgewindebohrung zu verstehen ist, ausgebildet. Dies gewährleistet eine abgedichtete Kammer, da ausschliesslich eine abgedichtete Öffnung vorhanden ist über die die Antriebsachse eintritt und eine Verbindung mit dem Antriebskeil gewährleistet.

Als vorteilhaft hat sich gezeigt, wenn die abgedichtete Kammer mittels der Dichteinheit abgedichtet ist und die Dichteinheit schwimmend angeordnet ist. Wie bereits oben erwähnt ermöglicht die Dichteinheit einen abgedichteten Zugang zur Kammer. Es hat sich als vorteilhaft gezeigt, wenn die Dichteinheit mehrteilig vorzugsweise zweiteilig aufgebaut ist, dass mehr Toleranz in der Dichteinheit vorliegt und dadurch bei einer Neigebewegung des Absperrkeils die Dichtheit dennoch gewährleistet ist. Vorzugsweise beinhaltet die Dichteinheit einen Abstreifer und eine Dichtung, vorzugsweise ein Wellendichtring, wodurch verhindert wird, das bei der Verschiebung des Absperrkeils Schmutz oder Anteile vom Medium in die Kammer eintritt.

Es ist vorteilhaft, wenn die Dichteinheit am oberen Ende des Absperrkeils angeordnet und fixiert ist und die Dichteinheit sich mit der Verschiebung des Absperrkeils mitverschiebt.

Vorzugsweise weist die Antriebseinheit eine Antriebsache auf, bei deren Betätigung sich der Absperrkeil nach oben oder unten zum Öffnen oder Schliessen bewegt. Die Antriebsachse ist vorzugsweise nicht steigend im Gehäuse angeordnet.

Als bevorzugte Ausführungsform hat sich gezeigt, wenn die Gewindeverbindung durch ein Innengewinde in Hohlraum bzw. der Bohrung des Absperrkeils und einem Aussengewinde an der Antriebsachse oder einem Innengewinde in der Antriebsachse und einem Aussengewinde im Hohlraum des Absperrkeils gebildet ist. Diese Anordnung ermöglicht trotz zusätzlicher Kammer in der Schiebereinheit eine funktionale und kompakte Bauart, so dass die Gewindeverbindung geschützt ist.

Als vorteilhaft hat sich auch gezeigt, wenn die abgedichtete Kammer durch einen sich im Absperrkeil angeordneten längs erstreckenden Hohlraum, vorzugsweise eine Bohrung, gebildet ist. Wobei der Hohlraum vorzugsweise koaxial zur Antriebsachse verläuft und nicht durchgehend ausgebildet ist, sondern gegen das untere Ende des Absperrkeils hin geschlossen ist.

Vorzugsweise ist die Dichteinheit verschiebbar bzw. schwimmend auf der Antriebsachse angeordnet.

Alternativ besteht die Möglichkeit um die Antriebsachse eine Schutzhülse anzuordnen. Vorzugsweise kann die Schutzhülse als starres Rohr ausgebildet sein aber vorstellbar wäre auch ein teleskopartiges Rohr oder eine balgartige Hülse die die Antriebsachse schützt.

Als vorteilhaft hat sich dabei gezeigt, wenn die Dichteinheit auf der Schutzhülse verschiebbar angeordnet ist. Die Schutzhülse erstreckt sich vorzugsweise entlang des Schieberraums im Armaturengehäuse um die als Antriebsspindel ausgebildete Antriebsachse herum. Beim Öffnen der Absperrarmatur verschiebt sich der Absperrkeil nach oben und die Schutzhülse taucht dann in die im Absperrkeil vorgesehene Nut ein. Die Schutzhülse wird im Absperrkeil versenkt.

Alle Ausgestaltungmöglichkeiten sind untereinander frei kombinierbar.

Drei Ausführungsbeispiele der Erfindung werden anhand der Figuren beschrieben, wobei sich die Erfindung nicht nur auf diese Ausführungsbeispiele beschränkt. Es zeigen:
- Fig. 1: eine Schnittansicht einer erfindungsgemässen Schiebereinheit in einer Absperrarmatur in geschlossener Stellung, bei der sich die Gewindeverbindung im Absperrkeil erstreckt,
- Fig. 2: eine Schnittansicht einer erfindungsgemässen Schiebereinheit in einer Absperrarmatur in offener Stellung, bei der sich die Gewindeverbindung im Absperrkeil erstreckt,
- Fig. 3: eine Schnittansicht einer erfindungsgemässen Schiebereinheit in einer Absperrarmatur in geschlossener Stellung, bei der die Gewindeverbindung mit Hilfe eines Gewindeeinsatzes im Absperrkeil gebildet ist,
- Fig. 4: eine Schnittansicht einer erfindungsgemässen Schiebereinheit in einer Absperrarmatur in offener Stellung, bei der die Gewindeverbindung mit Hilfe eines Gewindeeinsatzes im Absperrkeil gebildet ist,
- Fig. 5: eine Schnittansicht einer erfindungsgemässen Schiebereinheit in einer Absperrarmatur in geschlossener Stellung, bei der die Gewindeverbindung mit Hilfe eines Gewindebolzens im Absperrkeil gebildet ist und
- Fig. 6: eine Schnittansicht einer erfindungsgemässen Schiebereinheit in einer Absperrarmatur in offener Stellung, bei der die Gewindeverbindung mit Hilfe eines Gewindebolzens im Absperrkeil gebildet ist.

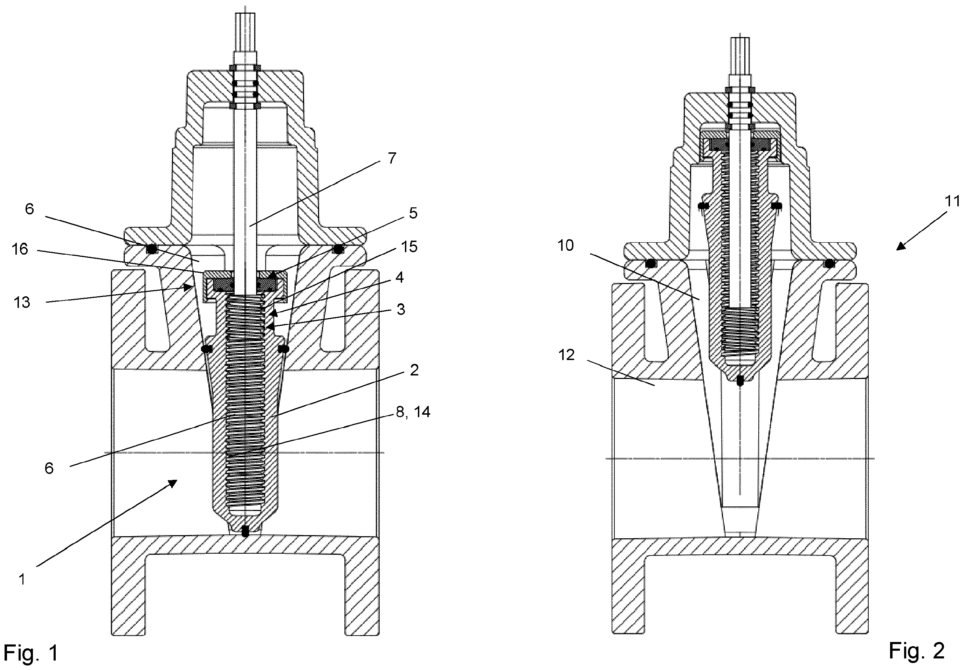

In allen Ausführungsformen beinhaltet die Schiebereinheit 1 für eine Absperrarmatur 11 einen Absperrkeil 2, der durch eine Antriebseinheit 3 betätigbar ist und sich die Absperrarmatur 11 dadurch öffnen und schliessen lässt. Die Antriebseinheit 3 der Schiebereinheit 1 weist eine Gewindeverbindung 4 auf durch die der Absperrkeil 2 verstellbar ist. Bei einer solchen Armatur ist es üblich, dass Medium und Schmutz im Schieberraum 10 des Armarmaturengehäuses 12 auftritt und dies bisher die Gewindeverbindungen derart verschmutzte, dass die Schiebereinheiten 1 nur mit sehr hohem Drehmoment betätigbar waren. Um nun solche Verschmutzungen zu vermeiden, weist die erfindungsgemässe Schiebereinheit 1 eine abgedichtete Kammer 6 auf, was den Figuren 1 bis 6 und allen Ausführungsformen zu entnehmen ist. Die Gewindeverbindung 4 ist in dieser abgedichteten Kammer 6 angeordnet. Es ist vorteilhaft, wenn die komplette Gewindeverbindung 4 in der Kammer 6 angeordnet ist, dadurch wird sowohl das komplette Innen- wie auch Aussengewinde geschützt. Zur Abdichtung der Kammer 6 ist im Übergangsbereich 13, also zwischen den in vertikaler Richtung bzw. senkrecht zur Durchflussrichtung verstellbaren Elemente, wie beispielsweise dem Absperrkeil 2 und den festen Elementen, die sich vertikal zur Durchflussrichtung nicht verschieben, eine Dichteinheit 5 angeordnet. Der Übergangsbereich 13 ist jeweils verschiebbar und verschiebt sich entsprechend dem Absperrkeil 2. Durch die im Übergangsbereich angeordnete Dichteinheit 5 ist die Kammer 6 abgedichtet und die komplett darin angeordnete Gewindeverbindung 4 vor in den Schieberraum eintretendes Medium und Schmutz geschützt, sowohl bei offener wie auch geschlossener Absperrarmatur 11. Das heisst, das Medium kann durchaus in den Schieberraum 10 gelangen aber die den Schieberraum 10 hindurchragende Antriebseinheit 3, speziell die Gewindeverbindung 4 an der Antriebseinheit 3, ist nicht mehr offen zugänglich.
Die Kammer 4 wird zumindest teilweise durch den im Absperrkeil 2 angeordnet Hohlraum 8 gebildet. Wobei der Hohlraum vorzugsweise als Bohrung 8 ausgebildet ist, der gegen unten hin geschlossen ist bzw. in einer Sacklochbohrung endet.
Die in Fig. 1 und 2 dargestellte Armatur 11 zeigt eine Ausführung der erfindungsgemässen Schiebereinheit 1 bei der eine Innengewindebohrung 14 den Hohlraum 8 entlang des Inneren des Absperrkeils 2 bildet. Das am Ende der nichtsteigenden Antriebsachse 7 angeordnete Aussengewinde 15 greift mit dem Innengewinde im Absperrkeil 2, wodurch der Absperrkeil 2 sich in die Offen- oder Zu-Position verlagern lässt. Es ist vorteilhaft, wenn der ineinandergreifende Bereich der Gewindeverbindung 4 nicht allzu lange ausfällt, vorzugsweise ein bis 4-mal des Gewindedurchmessers und mit einem gewissen Radialspiel ausgelegt ist. Dadurch erfährt der Absperrkeil 2 einen gewissen Freiheitsgrad in Strömungsrichtung und zentriert sich im Dichtsitz im Armaturengehäuse 12 selbst. Die Dichteinheit 5 ist am oberen Ende des Absperrkeils 2 angeordnet und ist schwimmend auf der Antriebsachse 7 platziert, das heisst, dass die Dichteinheit 5 sich bei einer Betätigung der Schiebereinheit 1 entlang der Antriebsachse 7 mitverschiebt. Die Dichteinheit 5 ist vorzugsweise mehrteilig ausgebildet und kann sich dadurch ebenfalls dem Freiheitsgrad des Absperrkeils 2 anpassen. Vorzugsweise wird die Dichteinheit 5 mit dem Absperrkeil 2 verbunden, das heisst, verschiebt sich der Absperrkeil 2, verschiebt sich entsprechend auch die Dichteinheit mit. Als vorteilhaft hat sich gezeigt, wenn die Dichteinheit 5 an der Aussenseite vom Absperrkeil 2 umfasst ist, wodurch die Dichteinheit 5 axial und radial geführt ist. Um die Dichteinheit 5 möglichst einfach am Absperrkeil 2 anzuordnen, wird vorzugsweise ein am oberen Ende des Absperrkeils 2 abschliessender Deckel 16, angebracht. In der in den Figuren 1 und 2 gezeigten Ausführungsform ist die Antriebsachse 7 der Antriebseinheit 3 vorzugsweise als zylindrische Welle ausgebildet, die am Ende ein Aussengewinde aufweist, das mit der Innengewindebohrung 14 im Absperrkeil 2 kämmt. Die abgedichtet Kammer 6 wird in dieser Ausführungsform durch die im Absperrkeil 2 verlaufende Innengewindebohrung 14 gebildet. Dieses Innengewinde kann entweder direkt in den Keil eingearbeitet sein oder auch mittels eines zusätzlichen Einsatzes aus dem gleichen oder einem anderen Material ausgeführt werden.

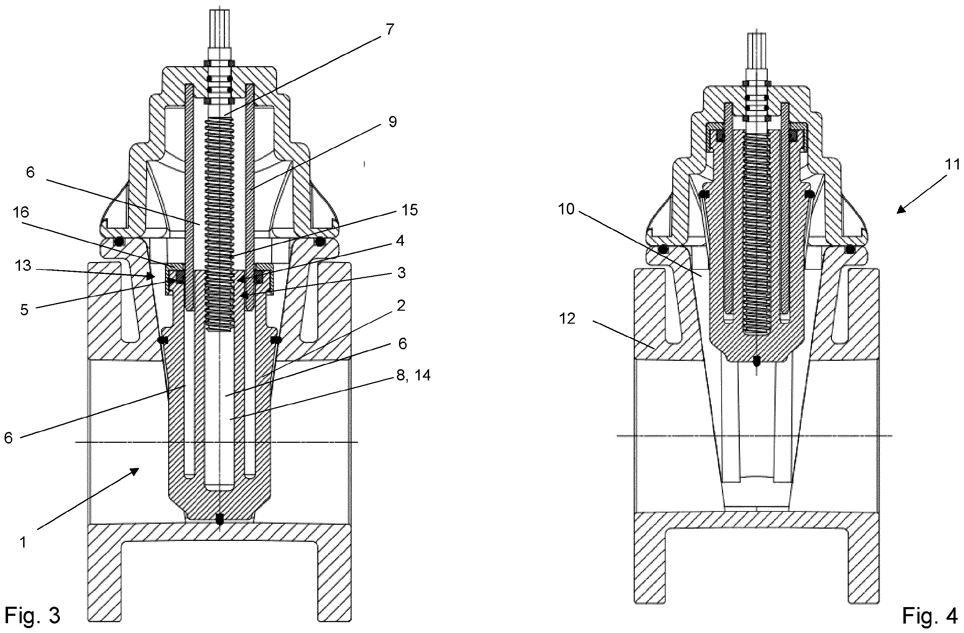

Die Figuren 3 und 4 zeigen eine alternative Ausführungsform, bei der sich ein Teil der abgedichteten Kammer 6 im Hohlraum 8, der im Absperrkeil 2 verläuft, erstreckt und ein weiterer Teil durch die Schutzhülse 9 um die Antriebsachse 7 gebildet ist. Die Dichteinheit 5 ist ebenfalls vorzugsweise am oberen Ende des Absperrkeils 2 angeordnet und verschiebt sich entsprechend mit. In dieser Ausführungsform dichtet die Dichteinheit 5, welche wiederum vorzugsweise mehrteilig ausgebildet ist an der Schutzhülse 9, welche die Antriebsachse 7 umgibt. Beim Verschieben des Absperrkeils 2 in die geöffnete Armaturstellung, verschiebt sich der Absperrkeil 2 über die Schutzhülse 9 bzw. die Schutzhülse 9 wird im Absperrkeil 2 versenkt, der eine entsprechende Nut zur Aufnahme der Schutzhülse 9 aufweist. Um auch bei dieser Ausführungsform den Freiheitsgrad des Absperrkeils 2 zu gewährleisten ist im Absperrkeil 2 eine Mutter 17 mit Innengewinde angeordnet, welche auf der Antriebsachse 7, die als Gewindespindel ausgebildet ist, kämmt. Dadurch ist die im eingriff stehende Gewindeverbindung 4 nicht länger als ein- bis 4- mal des Gewindedurchmessers. Gut ersichtlich aus den Figuren 3 und 4 ist, dass durch die Schutzhülse 9, die einen Teil der abgedichteten Kammer 6 bildet, und den Hohlraum 8 im Absperrkeil 2, die Gewindeverbindung 4 komplett geschützt ist. Vorzugsweise bildet bei dieser Ausführungsform der Hohlraum 8 und die Schutzhülse 9 die abgedichtete Kammer 6. Anstelle der starren Schutzhülse 9 wäre auch ein Teleskoprohr oder eine balgartige Hülse um die Antriebsachse herum denkbar, die in axialer Richtung stauch- und dehnbar ist.

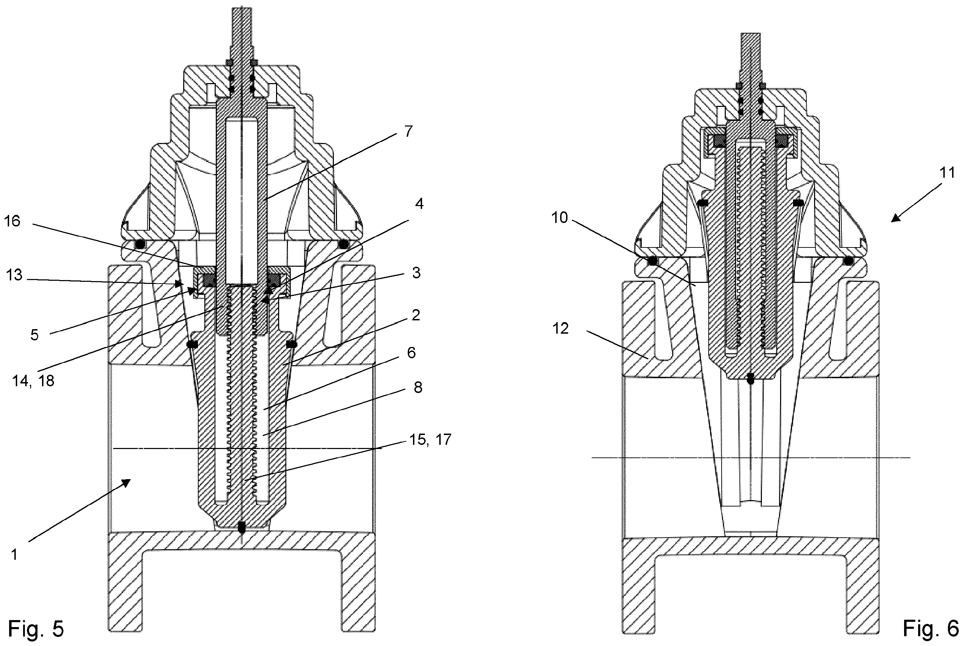

Eine weitere Ausführungsform ist in den Figuren 5 und 6 gezeigt. Die Gewindeverbindung 4 der Antriebseinheit 3 ist durch einen Gewindebolzen 16 und eine Gewindemutter 18 gebildet. Der Gewindebolzen 17 ist vorzugsweise am geschlossenen Ende des Hohlraums bzw. der Bohrung 8 im Absperrkeil 2 angeordnet. Der Gewindebolzen 17 ragt vertikal nach oben, und greift in die Gewindemutter 18, die in der Antriebsachse 7 angeordnet. Die Antriebsachse 7 ist vorzugsweise als Rohr ausgebildet oder weist zumindest am unteren Ende einen sich in der Antriebsachse 7 erstreckenden Hohlraum auf, in dem der Gewindebolzen 17 sich beim Verstellen des Absperrkeils 2 verschiebt. Es ist vorteilhaft, wenn die Gewindemutter 17 am unteren Ende der Antriebsachse 7 unverschiebbar angeordnet ist. Beim Betätigen der hohlen bzw. teilweise hohlen Antriebsachse 7, die nicht steigend ausgebildet ist, verschiebt sich der Gewindebolzen 17 vertikal und somit auch der Absperrkeil 2, der fest mit dem Gewindebolzen 17 verbunden ist. Am oberen Ende des Absperrkeils 2 ist ein Dichtelement 5 angeordnet, welches axial fest mit dem Absperrkeil 2 verbunden ist und schwimmend auf der Antriebsachse 7 angeordnet ist und so sich bei einer Betätigung des Absperrkeils 2 mitverschiebt und an der Antriebsachse 7 abdichtet. Die abgedichtete Kammer 6 wird durch den Hohlraum bzw. die Bohrung im Absperrkeil 2 gebildet, der durch die Dichteinheit 5 am oberen Ende des Absperrkeils an der Antriebachse 7 abgedichtet ist.

### Bezugszeichenliste

- 1: Schiebereinheit
- 2: Absperrkeil
- 3: Antriebseinheit
- 4: Gewindeverbindung
- 5: Dichteinheit
- 6: Kammer
- 7: Antriebsachse
- 8: Hohlraum / Bohrung
- 9: Schutzhülse
- 10: Schieberraum
- 11: Absperrarmatur / Absperrschieber
- 12: Armaturengehäuse
- 13: Übergangsbereich
- 14: Innengewindebohrung
- 15: Aussengewinde
- 16: Deckel
- 17: Gewindebolzen
- 18: Gewindemutter

## Patentansprüche

1. Schiebereinheit (1) für eine Absperrarmatur (11) vorzugsweise einen Absperrschieber (11) beinhaltend einen Absperrkeil (2) zum Verschliessen und Öffnen der Absperrarmatur (11) und eine Gewindeverbindung (4) aufweisende Antriebseinheit (3) zum Betätigen des Absperrkeils (2) **dadurch gekennzeichnet, dass** die Schiebereinheit (1) eine abgedichtete Kammer (6) aufweist, wobei die Gewindeverbindung (4) der Antriebseinheit (3) in der abgedichteten Kammer (6) angeordnet ist und zur Abdichtung der Kammer eine Dichteinheit (5) vorgesehen ist, wodurch die komplette Gewindeverbindung (4) konstant vor dem Medium und Verschmutzungen gestützt ist, sowohl bei offener wie auch geschlossener Absperrarmatur (11).

2. Schiebereinheit (1) nach Anspruch 1, **dadurch gekennzeichnet, dass** die abgedichtete Kammer (6) zumindest teilweise durch einen sich im Absperrkeil (2) erstreckenden Hohlraum (8), vorzugsweise eine Bohrung (8), gebildet ist.

3. Schiebereinheit (1) nach einem der Ansprüche 1 oder 2, **dadurch gekennzeichnet, dass** der Hohlraum (8) im Absperrkeil (2) nach unten hin geschlossen ist, bzw. nicht durchgehend verläuft.

4. Schiebereinheit (1) nach einem der Ansprüche 1 bis 3, **dadurch gekennzeichnet, dass** die abgedichtete Kammer (6) mittels der Dichteinheit (5) abgedichtet ist und die Dichteinheit (5) schwimmend angeordnet ist.

5. Schiebereinheit (1) nach einem der Ansprüche 1 bis 4, **dadurch gekennzeichnet, dass** die Dichteinheit (5) am oberen Ende des Absperrkeils (2) angeordnet und fixiert ist und die Dichteinheit (5) sich mit der Verschiebung des Absperrkeils (2) mitverschiebt.

6. Schiebereinheit (1) nach einem der Ansprüche 1 bis 5, **dadurch gekennzeichnet, dass** die Antriebseinheit (3) eine nicht steigende Antriebsache (7) aufweist, bei deren Betätigung sich der Absperrkeil (2) nach oben oder unten zum Öffnen oder Schliessen der Absperrarmatur (11) bewegt.

7. Schiebereinheit (1) nach einem der Ansprüche 1 bis 6, **dadurch gekennzeichnet, dass** die Gewindeverbindung (4) durch ein Innengewinde (14) angeordnet im Hohlraum des Absperrkeils (2) und ein Aussengewinde (15) angeordnet an der Antriebsachse (7) oder einem Innengewinde (17) angeordnet in der Antriebsachse (7) und einem Aussengewinde (16) angeordnet im Hohlraum (8) des Absperrkeils (2) gebildet ist.

8. Schiebereinheit (1) nach einem der Ansprüche 1 bis 7, **dadurch gekennzeichnet, dass** die Dichteinheit (5) verschiebbar bzw. schwimmend auf der Antriebsachse (7) angeordnet ist.

9. Schiebereinheit (1) nach einem der Ansprüche 1 bis 8, **dadurch gekennzeichnet, dass** die abgedichtete Kammer (6) die Gewindeverbindung (4) der Antriebseinheit (3) umgibt.

10. Schiebereinheit (1) nach einem der Ansprüche 1 bis 9, **dadurch gekennzeichnet, dass** die Dichteinheit (5) im Übergangsbereich (13) angeordnet ist.

11. Schiebereinheit (1) nach einem der Ansprüche 1 bis 10, **dadurch gekennzeichnet, dass** die abgedichtete Kammer (6) durch einen sich im Absperrkeil (2) erstreckenden Hohlraum (8), vorzugsweise eine Bohrung (8), gebildet ist.

12. Schiebereinheit (1) nach einem der Ansprüche 1 bis 11, **dadurch gekennzeichnet, dass** eine Schutzhülle (9) um die Antriebsachse (7) angeordnet ist.

13. Schiebereinheit (1) nach einem der Ansprüche 1 bis 12, **dadurch gekennzeichnet, dass** die Antriebsachse (7) ein Aussen- oder Innengewinde (15, 18) aufweist.

14. Schiebereinheit (1) nach einem der Ansprüche 1 bis 13, **dadurch gekennzeichnet, dass** die Antriebsachse (7) zumindest teilweise hohl ausgebildet ist.
